(19) Europäisches Patentamt / European Patent Office / Office européen des brevets

(11) **EP 2 703 208 A1**

(12) **EUROPEAN PATENT APPLICATION**

(43) Date of publication:
**05.03.2014 Bulletin 2014/10**

(51) Int Cl.:
***B60L 9/00*** (2006.01)

(21) Application number: **12182924.6**

(22) Date of filing: **04.09.2012**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**

(71) Applicant: **ABB Technology AG**
**8050 Zürich (CH)**

(72) Inventors:
• **Mester, Akos**
**5415 Nussbaumen (CH)**

• **Dujic, Drazen**
**5430 Wettingen (CH)**
• **Besselmann, Thomas**
**8050 Zürich (CH)**

(74) Representative: **ABB Patent Attorneys**
**C/o ABB Schweiz AG**
**Intellectual Property (CH-LI/IP)**
**Brown Boveri Strasse 6**
**5400 Baden (CH)**

(54) **Controlling a modular converter**

(57)     A modular converter (10) comprises a plurality of converter cells (36), which are connected in series on a first side and are connected on a second side, wherein each converter cell (36) comprises an AC-to-DC converter (40) connected to the first side and a DC-to-DC converter (42) connected to the second side.

A method for controlling the modular converter (10) comprises the steps of: estimating the power transferred by the modular converter (10); comparing the transferred power with a threshold value; when the transferred power is bigger than the threshold value, operating the modular converter in a normal load operation mode (116, 122, 128); when the transferred power is smaller than the threshold value, operating the modular converter in a low load operation mode (114, 120, 126), in which the converter cells (36) are operated, such that switching losses are reduced with respect to the normal load operation mode.

Fig. 1

**EP 2 703 208 A1**

**Description**

FIELD OF THE INVENTION

The invention relates to a method for controlling a modular converter, a controller of a modular converter and a modular converter.

BACKGROUND OF THE INVENTION

Electrical trains or trams may have a modular converter that comprises a plurality of converter cells that produce from an AC input voltage a DC output voltage which is supplied to the rest of the electrical installations on-board. Usually, the AC input voltage is supplied from an overhead line.

The converter cells of the modular converter may comprise a resonant DC-to-DC converter, in which a DC-to-AC converter on the line side is connected via a resonant transformer with an AC-to-DC converter on the motor side. Both the DC-to-AC converter and the AC-to-DC converter may be active converters with controllable semiconductor switches.

A control method for the modular converter is based on the hard-switching of the AC-to-DC converter semiconductors and the soft-switching of the DC-to-DC converter semiconductors, with zero voltage switching (ZVS) during the turn-on of the DC-to-DC converter semiconductors, and low current switching during turn-off.

As the switching losses depend on voltage and current during the switching, this switching method may result in low switching losses and thus in a high-efficiency DC-to-DC conversion at nominal power ratings.

However, when this switching method is used under light-load or no-load conditions, the switching losses of the DC-to-DC converter cells stay approximately the same, but less power is transferred, and thus efficiency decreases. The extreme case is, no load, when no power is required to be transferred by the converter cells. However, a circulating current, which is needed to support ZVS, may lead to the presence of switching losses in almost equal amounts.

DESCRIPTION OF THE INVENTION

It is an object of the invention to enhance the efficiency of a modular converter under light-load or no-load conditions.

This object is achieved by the subject-matter of the independent claims. Further exemplary embodiments are evident from the dependent claims and the following description.

An aspect of the invention relates to a method for controlling a modular converter. The modular converter may be used for supplying power to electrical motors of a train.

The modular converter comprises a plurality of converter cells, which are connected in series on a first side and are connected with each other, for example in series and/or in parallel, on a second side. The first side of a converter cell may be an input side or line side. The second side of the converter cell may be an output side or motor side.

Each converter cell comprises an AC-to-DC converter connected to the first side and a DC-to-DC converter connected to the second side. The DC-to-DC converter may be a resonant converter, which may comprise a transformer as a resonant tank.

According to an embodiment of the invention, the method comprises the steps of: estimating the power transferred by the modular converter; comparing the transferred power with a threshold value; when the transferred power is greater than the threshold value operating the modular converter in a (first) normal load operation mode; and when the transferred power is smaller than the threshold value operating the modular converter in a low load (second) operation mode, in which the converter cells are operated, such that switching losses are reduced with respect to the normal load operation mode.

Based on the transmitted power, the modular converter may be run/controlled with different operation modes. These modes may determine which parts of the modular converter may be activated and/or may range from the switching of the full modular converter under normal-load conditions, to no switching of the modular converter under no-load conditions. In this way, a significant reduction of the switching losses and improvement of the overall efficiency of the modular converter may be achieved under light-load or no-load conditions.

According to an embodiment of the invention, the method comprises further the steps of: measuring an output DC voltage and an output DC current of the modular converter; and estimating the transferred power, based on the measured output voltage and the measure output current. The transferred power may be calculated from the product of output voltage and output current. Analogue, the transferred power may be calculated from the input voltage and the input current, or from other signals.

According to an embodiment of the invention, the method furthermore comprises the steps of: comparing the transferred power with a first threshold value and a second threshold value; when the transferred power is smaller than the first threshold value, operating the modular converter in a first low load operation mode; and when the transferred power is smaller than the second threshold value, operating the modular converter in a second low load operation mode. The modular converter may be operated in different low load operation modes. The threshold values, in which the modular converter activates the respective low load operation mode may differ from one another.

According to an embodiment of the invention, the method further comprises the step of: when the transferred power is smaller than the first threshold value and the second threshold value operating the modular converter in the first low load operation mode and the second low load operation mode. Additionally, the modular converter may be operated simultaneously at different low load operation modes.

According to an embodiment of the invention, in a low load operation mode at least some of the AC-to-DC converters of the converter cells and/or at least some of the DC-to-DC converters of the converter cells are not switched or activated. The low load operation modes may be based on switching strategies in which less switching operations take place as in the normal load operation mode. For example, the switching of a complete part of the modular converter may be deactivated or turned off.

In the following embodiment, three different low load operation modes will be described:

According to an embodiment of the invention, a first low load operation mode comprises the steps of: determining a number of DC-to-DC converters to be deactivated based on the transferred power and on the maximum power that is transferable by a converter cell; and deactivating the number of DC-to-DC converters. The other DC-to-DC converters may be activated. In the first low load operation mode, no power is transferred by a deactivated DC-to-DC converter. The power that needs to be transferred is transferred by the other DC-to-DC converters.

According to an embodiment of the invention, the first low load operation mode further comprises the steps of: selecting a set of available DC-to-DC converters to be deactivated based on a DC-voltage at the input and/or the output of the DC-to-DC converter, which may have to lie within a voltage band; and selecting the number of DC-to-DC converters to be deactivated from the set of available DC-to-DC converters.

In the first low load operation mode, the number of switched/activated/turned on DC-to-DC converters is adapted to the transferred power. This number is chosen by selecting a set of suitable DC-to-DC converters, where the minimum number is limited by the maximum power that can be transferred by a single converter cell. The DC-to-DC converters to be deactivated are selected from this set of suitable DC-to-DC converters.

According to an embodiment of the invention, in the normal load operation mode, contrary to the first low load operation mode, all DC-to-DC converters are switched or activated.

According to an embodiment of the invention, a second low load operation mode comprises the steps of: determining a first side AC current and/or determining DC voltages after the AC-to-DC converter; activating AC-to-DC converters, when the first side AC current is higher than a threshold value and/or one of the DC voltages is smaller than a threshold value; and deactivating the AC-to-DC converters, when the sum of DC voltages is higher than a threshold value.

In the second low load operation mode, the energy stored in the DC link between the AC-to-DC converter and the DC-to-DC converter may be used to supply the DC-to-DC converter.

The switching losses of the AC-to-DC converters are not independent of the transformed power, they decrease with decreasing power. Nevertheless, switching losses in the AC-to-DC converters may contribute to a reduction in the overall efficiency. The size of the energy storages, which under light-load conditions is relatively generous compared to the transferred power, enables specific switching regimes under light-load in order to increase the energy efficiency of the AC-to-DC converters.

According to an embodiment of the invention, in the normal load operation mode, contrary to the second low load operation mode, the AC-to-DC converters are continuously activated.

According to an embodiment of the invention, a third low load operation mode comprises the steps of: determining a minimum number of required converter cells based on the transferred power; and short-circuiting not required converter cells.

In the third low load operation mode, the number of used converter cells may be changed by short-circuiting the input terminals of the converter cells. The minimum number of converter cells required for operation may be limited by the peak value of the first side AC voltages of the modular converter, the maximum power that can be transferred by a single converter cell and/or the maximally acceptable value(s) of the DC voltages between the AC-to-DC converter and the DC-to-DC converter.

According to an embodiment of the invention, in the normal load operation mode, contrary to the third low load operation mode, all converter cells of the modular converter are operated.

It has to be noted that the first, second and third low load operation modes may be combined and with further switching/control method for the modular converter. Furthermore, the method and the low load operation modes as described in the above and in the following may only be applied to a subset of converter cells. The other converter cells may be controlled in different forms.

Summarized, the method provides an energy-efficient switching strategy at varying power ratings, not only at a nominal operating point. In particular, in traction applications power ratings change constantly during a load cycle, thus a high efficiency over a whole range of power ratings is beneficial.

Furthermore, the method provides a stable operation of the modular converter and may achieve the control objectives (sinusoidal input current and control of DC output voltage) under steady-state conditions for different load conditions.

Additionally, a bi-directional functionality, i.e. energy flow from the first side to the second side and vice versa is supported by the method.

A further aspect of the invention relates to a controller of a modular converter, wherein the controller is adapted for performing the method as described in the above and in the following. The controller may comprise a control unit providing switching signals to said AC-to-DC converter and said DC-to-DC converter, implementing one or more of the low load control methods as described in the above and in the following.

A further aspect of the invention relates to a modular converter for supplying at least one electrical motor with a DC output voltage. For example, the electrical motor may be the motor of a train or a tram. It has to be understood that features of the method as described in the above and in the following may be features of the modular converter and the controller as described in the above and in the following, and vice versa.

The modular converter comprises a controller as described in the above and in the following. The controller or control unit may generate and provide switching signals to the AC-to-DC converter and to the DC-to-DC converter.

The AC-to-DC converter may be a full-bridge converter, which is adapted for converting a first side AC voltage into a first side DC voltage, or vice versa.

According to an embodiment of the invention, each DC-to-DC converter comprises a DC-to-AC subconverter, a transformer and an AC-to-DC subconverter connected in series.

The DC-to-DC converter may be a resonant converter, which is adapted for converting the first DC voltage to a second DC voltage, or vice versa.

These and other aspects of the invention will become apparent from and elucidated with reference to the embodiments described hereinafter.

BRIEF DESCRIPTION OF THE DRAWINGS

The subject matter of the invention will be explained in more detail in the following text with reference to exemplary embodiments which are illustrated in the attached drawings.

Fig. 1 schematically shows a modular converter according to an embodiment of the invention.

Fig. 2 schematically shows a modular converter according to an embodiment of the invention.

Fig. 3 schematically shows a modular converter according to an embodiment of the invention.

Fig. 4 shows a flow diagram for controlling a modular converter according to an embodiment of the invention.

Fig. 5 shows a diagram with operation ranges for a modular converter according to an embodiment of the invention.

Fig. 6 shows a flow diagram for a low load operation method according to an embodiment of the invention.

Fig. 7 shows a diagram with the power output of a modular converter according to an embodiment of the invention.

Fig. 8 shows a flow diagram for a low load operation method according to an embodiment of the invention.

Fig. 9 shows a flow diagram for a low load operation method according to an embodiment of the invention.

In principle, identical parts are provided with the same reference symbols in the figures.

DETAILED DESCRIPTION OF EXEMPLARY EMBODIMENTS

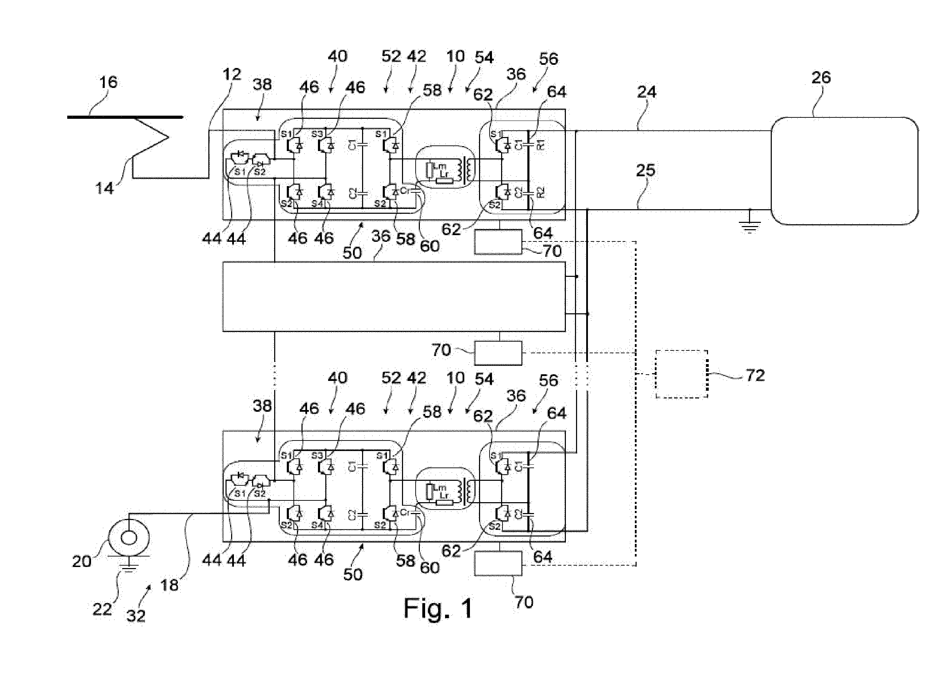

Fig. 1 shows a modular converter 10 for an electric train or tram, which may also be referred to as power electronic transformer (PET). In general, the modular converter may be adapted for transforming a medium AC voltage to a low or medium DC voltage. The converter has an input 12 that is connected via a pantograph 14 with a catenary or overhead line 16, which supplies the converter 10 with an medium-voltage AC input voltage. The converter 10 has an earthing point 18, which connects the converter 10 via the wheels 20 of the train or tram to the earth 22.

The converter 10 has a positive DC output 24 and a negative DC output 25, which supplies a load 26 (i.e. electrical installation on-board) of the train or tram with a DC output voltage of about 1 kV. The load 26 may comprise an electric DC motor, another converters and/or an auxiliary power supply.

In general, the converter 10 is an AC-to-DC converter with a first, AC or line side 32 providing the input 12 and the earthing point 18, and a second, DC or motor side 34 providing the output phases 24, 25.

The converter 10 has a modular structure and comprises a plurality of (for example nine) four-terminal converter cells 36. The converter cells 36 are connected in series on the first side 32, i.e. connected in series between the input 12 and the earthing point 18 and in parallel on the second side 34, i.e. connected in parallel to the two outputs 24, 25.

Only the first and the last converter cell 36 are shown in detail.

Each converter cell 36 comprises a short-circuit switch 38, an AC-to-DC converter 40 and a DC-to-DC converter 42.

The short-circuit switches 38 of a converter cell 36 is connected in series with the short-circuit switches 38 of the other converter cells 36 and comprises two power semiconductor switches 44 connected in series in opposite directions. In general, the short-circuit switches 38 may comprise other kind of switches, for example an electromechanical switch.

The AC-to-DC converter 40 is an active front end with four power semiconductor switches 46 connected into an H-bridge. The AC-to-DC converter 40 and the DC-to-DC converter 42 are connected via a DC link, which comprises a capacitance 50. The output of the DC-to-DC converter 42 of a converter cell 36 is connected in parallel with the outputs of the DC-to-DC converters 42 of the other converter cells 36.

The DC-to-DC converter 42 is a resonant converter and comprises a first side resonant (sub)converter 52, a resonant tank or transformer 54, and a second side resonant (sub)converter 56, which are connected in series.

The line side resonant converter 52 is connected to the DC link 50 and comprises an upper and a lower power semiconductor switch 58 connected in series. One input of the primary side of the transformer 54 is connected between the two power semiconductor switches 58. The other input of the primary side of the transformer 54 is connected via a capacitor 60 to the negative side of the DC-link 50.

Also the second side resonant converter 56 comprises an upper and a lower power semiconductor switch 62 connected in series, which are connected in parallel with a second DC link with two capacitors 64 connected in series. One input of the secondary side of the transformer 54 is connected between the two power semiconductor switches 62. The other input of the primary side of the transformer 54 is connected between the capacitors.

All the power semiconductor switches 44, 46, 58, 62 may be IGBTs.

Each converter cell 36 may comprise a local controller 70, which is adapted to control the switches 44, 46, 58, 62 of the respective converter cell 36. The local controllers 70 may be communicatively interconnected with a main controller 72, which is adapted to control the local controller 70. However, it is also possible that the main controller 72 controls the semiconductor switches 44, 46, 58, 62 directly.

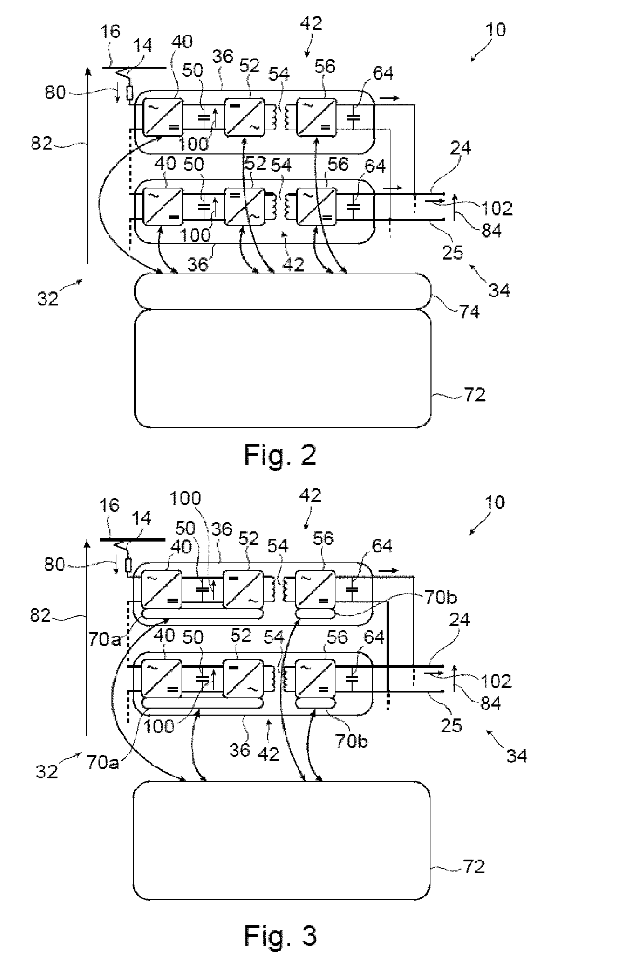

Fig. 2 shows a modular converter 10 with centralized control hardware. The main controller 72 has an interface 74 that is adapted to directly communicate with the subconverters 40, 52, 56 (and/or their semiconductor switches) of each converter cell 36.

Fig. 3 shows a modular converter 10 with distributed control hardware. The main controller 72 communicates with local controllers 70a, 70b of the converter cells 36. The local controller is adapted to control the subconverters 40, 52 (and /or their semiconductor switches). The local controller 70b is adapted to control the subconverter 56 (and /or its semiconductor switches).

In both cases (centralized or distributed control hardware), the modular converter 10 may be controlled with respect to a control method, which has control objectives of (1) a sinusoidal input current 80 with close-to-unity input power factor and (2) a stable DC power output. The control method may be executed on the main controller 72 only or on the main controller 72 and the local controllers 70, 70a, 70b.

With the control method only three variables may be measured: the input AC voltage 82, the input AC current 80 and the output DC voltage 84. While the semiconductors 46 of the AC-to-DC converters 40 may be controlled actively to achieve the control objectives, the DC-to-DC converters 42 may be operated open-loop at a fixed operating point (for example with a fixed switching frequency and a 50% duty cycle). Depending on the direction of power flow, either the semiconductor switches 58 of the first side DC-to-AC converter 52 or the semiconductor switches 62 of the second side AC-to-DC converter 56 may be switched.

The converter 10 may be operated in a motor operation mode and a generator operation mode. In the motor operation mode power is transferred from the first side 32 to the second side 34 of the converter 10, including a conversion of the AC voltage 82 to a set of first DC voltages 100 by the AC-to-DC converters 40 and a conversion of this set of first DC voltages to a second DC voltage 84 by the DC-to-DC converters 42. In a generator operation mode the flow of energy is reversed. Herein, the mode of operation is considered as a continuous function of the transferred power and the focus is on the switching strategy when the converter 10 is operated at loads much smaller than the rated one.

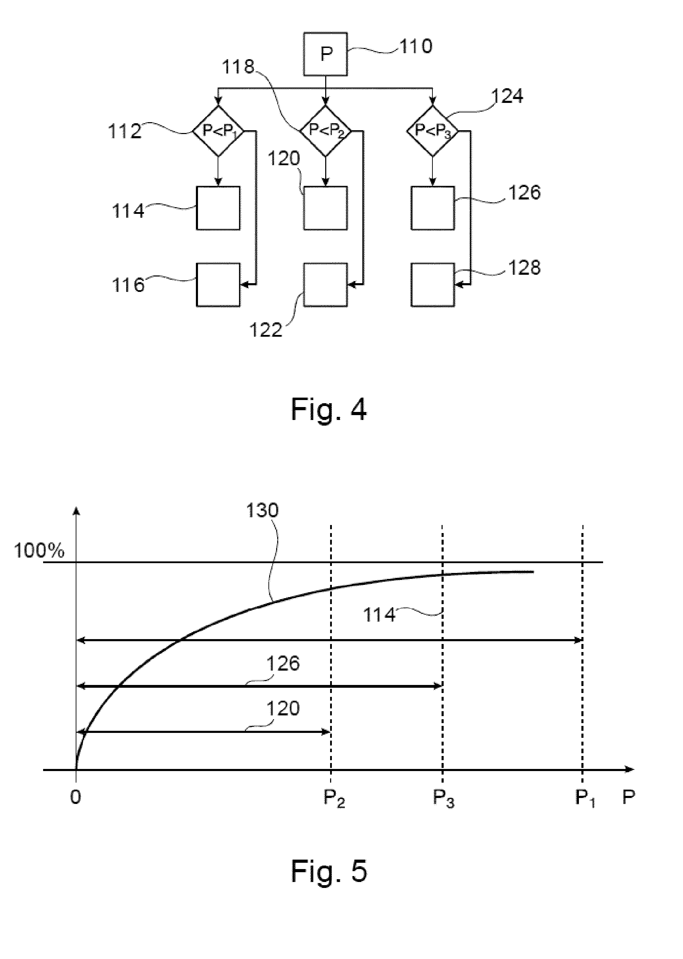

Fig. 4 shows a method for controlling the modular converter 10.

In step 110 the actual transferred power P of the converter 10 is determined or estimated. For example, the second DC voltage 84 and a second DC current 102 may be measured. The transferred power may be calculated from the product of these two values.

In the step 112 the transferred power P is compared with a power threshold value $P_1$ (see Fig. 5). When the transferred power is smaller than the threshold value $P_1$, in step 114, a selective operation method of the DC-to-DC converters 42 is performed. Otherwise, the DC-to-DC converters 42 are operated in normal operation in step 116 as explained above.

In the step 118 the transferred power P is compared with a power threshold value $P_2$. When the transferred power is smaller than the threshold value $P_2$, in step 120, a intermittent operation method of AC-to-DC converters 40 is performed. Otherwise, the AC-to-DC converters 40 are operated in normal operation in step 122 as explained above.

In the step 124 the transferred power P is compared with a power threshold value $P_3$. When in step 126, the transferred power is smaller than the threshold value $P_3$, an operation method with a reduced number of converter cells 36 is performed. Otherwise, in a normal operation mode in step 128 all converter cells are operated.

It has to be noted that each of the methods 114, 120, 126 may be applied separately or in a combined strategy with the other methods 114, 120, 126. However, the power range at which the methods may be advantageously applied may differ.

Fig. 5 shows a schematic diagram with the efficiency 130 of the modular converter 10, when operated in the normal mode for all loads. In the diagram, the x-axis indicates the actual power P. Fig. 5 sketches the power ranges $P_1$, $P_2$, $P_3$ for the proposed methods for low load operation.

As displayed, the selective operation method 114 of the DC-to-DC converters 42 may be applied from no transferred power up to the threshold $P_1$, which may be the nominal power of the converter 10. The other operation methods 120, 116 may be only advantageous in a limited power range. The operation method with a reduced number of converter cells 36 may be applied below the threshold $P_3$ which may be smaller or larger than $P_1$. The intermittent operation method of AC-to-DC converters 40 may be applied below $P_2$, which may be smaller or larger than $P_3$.

The steps of the control method of Fig. 4 may be executed completely in the main controller 72 or may be executed in the main controller 72 and the local controllers 70.

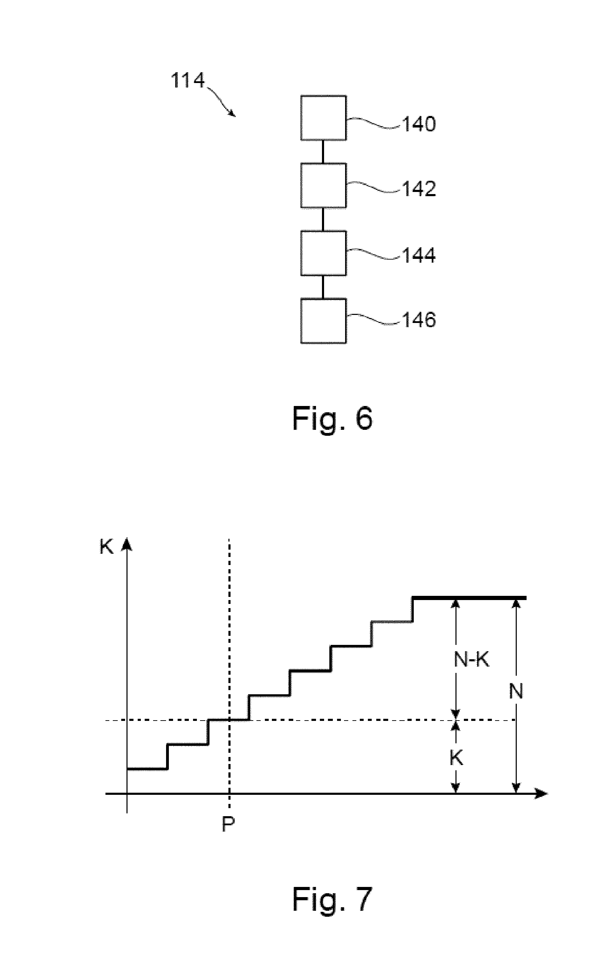

Fig. 6 shows the low load operation mode of step 114, in which DC-to-DC converters 42 may be selectively operated. In this step it is managed, for which converter cells 36 the DC-to-DC converter 42 is turned on (i.e. its semiconductor switches are switched) and for which converter cells 36 the DC-to-DC converter 42 is turned off (i.e. its semiconductor switches are not switched).

The method performed in step 114 will be explained also with respect to Fig. 7, which shows a relation between the transferred power P and the number N of activated DC-to-DC converters 42.

The selective low load operation of the DC-to-DC converters 42 comprises the repeated execution of the following steps (not necessarily in this order):

In step 140, the minimum number K of converter cells 36 is determined based on the power requirement of the modular converter 10. In this step, it is decided, how many (K) converter cells 36 are required to transfer the power P. If $P_{max\_1cell}$ is the maximum power that can be transferred by one cell, the power requirement for K is:

$$P / P_{max\_1cell} \le K$$

If N is the total number of converter cells 36, up to (N-K) DC-to-DC converters 42 can be turned off to increase the efficiency. However, due to further conditions of the modular converter 10, not all (N-K) DC-to-DC converters 42 may be available to be turned off.

In step 142, the number L of available converter cells 36 is determined based on the voltage requirement of the modular converter 10. In this context, an available converter cell 36 may mean that the DC-to-DC converter 42 of the converter cell 36 is available to be turned off.

In step 142, the first DC voltage 100 and the second DC voltage 84 of every DC-to-DC converter 42 are measured or estimated.

If the DC voltages 100, 84 are within their own individual bands $TrH_1$, $TrH_2$ (there may be separate bands for separate DC links, and separate bands for the two sides, i.e. for the voltages 100, 84, of the DC-to-DC converter 42), the DC-to-DC converter 42 of the respective converter cell 36 is considered as available to be turned off. For example, let $u_{DC1}$ and $u_{DC2}$ be the DC voltages 100, 84. If for example,

$$TrH_1 < u_{DC1,}\ u_{DC2} < TrH_{2,}$$

the DC-to-DC converter 42 of the respective converter cell 36 can be turned off to increase efficiency, otherwise the DC-to-DC converter 42 must be turned on to avoid instabilities of the modular converter 10.

Ultimately, there is a pool (or set) of L available converter cells 36 that can be turned off and N-L converter cells 36 that are not available.

In step 144, a number N-K of converter cells 36 are selected out of the pool of L available converter cells 36. Mathematically *min(N-K ; L)* DC-to-DC converters 42 can be turned off. The selection may be a random selection.

In step 146, the DC-to-DC converters 42 of the converter cells 36, that have not been selected, are deactivated (turned off), the DC-to-DC converters 42 for the converter cells 36, that have been selected, are activated (turned on). Mathematically *max(K; N-L)* of DC-to-DC converters 42 are turned off.

Note that in addition or alternatively, also other selection requirements may be employed. With this method, the number of activated DC-to-DC converters 42 is reduced to match the transferred power P. With this approach, switching losses may be reduced, because these occur only in the activated DC-to-DC converters 42, not in the remaining ones.

Please note that for a given power level, the minimum number of activated DC-to-DC converters 42 is always the same as determined by the method, while the set of DC-to-DC converters 42, which are activated, may not be the same.

For example, for a modular converter 10 with nine converter cells 36 and a particular load power level, three DC-to-DC converters 42 are activated, and those may be, for example, in converters cells 36 with numbers 1,4,7, Later, this may be converters cells 36 with numbers 2,4,5 or in general, any three converter cells 36 out of the nine.

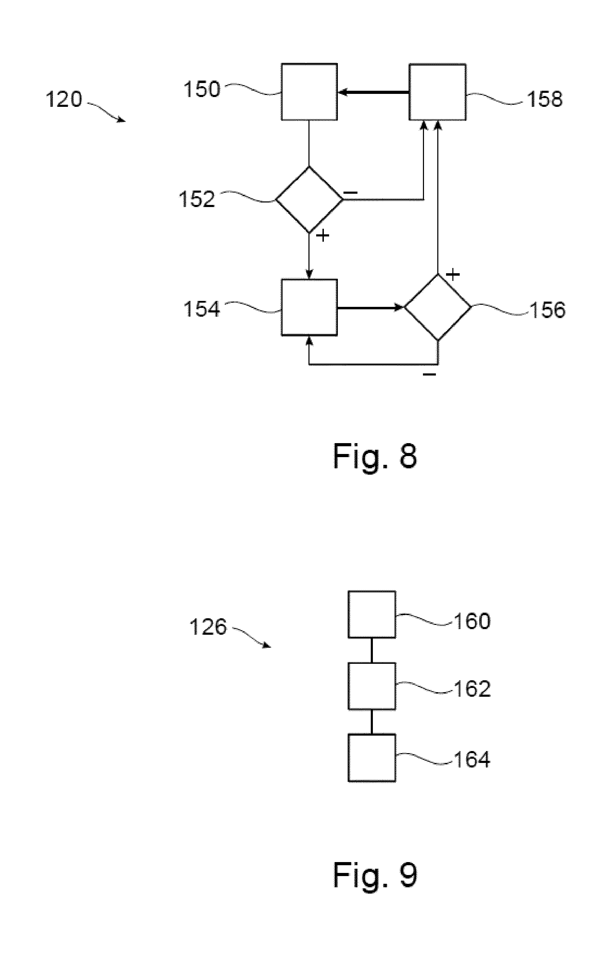

Fig. 8 shows the low load operation mode of step 120, in which an intermittent operation of AC-to-DC converters 40 is performed. The second method to increase the energy-efficiency of the modular converter 10 under light-load conditions is to run the AC-to-DC converters 40 in an intermittent mode.

During step 120, the following steps may be performed repeatedly (and not necessarily in this order):

In step 150, the AC current 80 on the first side of the modular converter 10 and/or the set of first DC voltages 100 is measured or estimated.

In step 152, the AC current 80 is compared with a threshold. Alternatively or additionally, each of the first DC voltages 100 is compared with an individual threshold.

In step 154, if the AC current 80 is greater than the said threshold, and/or if any of the first DC voltages 100 is smaller than its threshold, the AC-to-DC converters 40 are activated.

In step 156, the sum of the first DC voltages 100 are compared with a further threshold. The AC-to-DC converters 40 stay activated until the sum of the first DC voltages 100 reaches the further threshold (or in other words the modular converter 10 reaches a steady state).

Otherwise, in step 158, the AC-to-DC converters 40 are deactivated.

Depending on the set of first DC voltages 100, the following happens after the steady state has been reached and the AC-to-DC converters 40 have been turned off:

If the peak of the first side AC voltage 82 is lower than the sum of the first DC voltages 100, there are neither switching losses nor conduction losses in the AC-to-DC converters 40.

If the peak of the first side AC voltage 82 is higher than the sum of the first DC voltages 100, the AC-to-DC converters 40 start working as diode rectifiers, there are small conduction losses of the diodes, but still no switching losses.

Depending on the direction and magnitude of the transferred power P, the set of first DC voltages 100 will decrease, while the peak value of the first side AC current 80 increases, until the AC-to-DC converters 40 are activated again.

For very low loads or under no-load conditions, the energy consumption may be so low that the diode rectification of the AC-to-DC converters 40 is sufficient to maintain the DC voltages 100 without the need to start switching the AC-to-DC converters 40. The benefit is that no switching losses occur in the AC-to-DC converters 40, increasing the efficiency for low output powers. If instead of the threshold of the line current 80, the threshold of the DC voltage is used to decide when to enable the AC-to-DC converters 40 again, the diode rectification can be avoided completely by defining a high threshold for the set of first DC voltages 100 as steady state.

Fig. 9 shows the low load operation mode of step 126, in which a reduced number of converter cells 36 is operated. The third method to increase the efficiency is to use less converter cells 36 to transfer the required power P.

The difference between this method and the previous ones may be seen in that the converter cells 36 not used are short circuited at the input terminals with the short-circuit switch 38, thus completely taken out of the operational part of the modular converter 10. During the previous two methods either the AC-to-DC converter 40 or the DC-DC converter 42 was turned off, but the converter cell 36 was not removed (completely bypassed) from the operational part of the modular converter 10 by short circuiting the input terminals.

The method of step 126 may comprise the repeated execution of the following steps (and not necessarily in this order):

In step 160, the first side AC voltage 82 at the input terminals of the modular converter 10 are measured or estimated.

In step 162, the number M of required converter cells 36 is determined. The decision on the number M is based on the transferred power P, the peak value $U_p$ of the first side AC voltage 82 at the input terminal, the maximally acceptable value(s) for the set of first DC voltages 100, and/or the maximum power that can be transferred using one converter cell 36.

The following condition may provide a lower bound on the number M of converter cells 36:

$$M \geq max \left( P / P_{max\_1cell}, \ U_p / u_{DC\_maxi} \right)$$

wherein $u_{DC\_maxi}$ is the maximum DC voltage in converter cell i, that may not cause damage to the modular converter 10 and $P_{max\_1cell}$ is the maximum power that can be transferred using one converter cell 36.

In step 164, a number of converter cells 36 is selected, which is equal to the number M of the required converter cells 36 The selection may be a random selection. The selected cells 36 are activated and the other converter cells 36 are short circuited.

An additional benefit of this method may be seen, when considering it together with the intermittent operation of the AC-to-DC converters 40 (step 120). If a given number of converter cells 36 are short circuited, the first DC voltage 100 can be kept close to their nominal value, even without using a line controller.

All three methods 114, 120, 126 may be very useful for a modular converter 10, which has the inherent property, that the number of DC links (and the DC link voltage 100 on the parallel side) may be changed by quantized values without using any sort of line control.

With the above described methods, lower switching losses at light-load or no-load condition may be achieved and thus a high efficiency may be maintained over the whole power range (and/or over the whole load cycle).

By applying this light-load strategy, it is possible to keep the efficiency of the resonant converter 10 high under light-load and no-load conditions. The methods may be simple to implement as an addition to an existing control method. The methods may provide a continuous adaptation of the switching strategy for different power levels while the overall control objectives are maintained. There is no additional hardware needed. All methods can work independently or in any combination, which enables the possibility to adapt the switching strategy based on the requirements for different applications.

While the invention has been illustrated and described in detail in the drawings and foregoing description, such illustration and description are to be considered illustrative or exemplary and not restrictive; the invention is not limited to the disclosed embodiments. Other variations to the disclosed embodiments can be understood and effected by those skilled in the art and practising the claimed invention, from a study of the drawings, the disclosure, and the appended claims. In the claims, the word "comprising" does not exclude other elements or steps, and the indefinite article "a" or "an" does not exclude a plurality. A single processor or controller or other unit may fulfil the functions of several items recited in the claims. The mere fact that certain measures are recited in mutually different dependent claims does not indicate that a combination of these measures cannot be used to advantage. Any reference signs in the claims should not be construed as limiting the scope.

**Claims**

1. A method for controlling a modular converter (10),
   the modular converter (10) comprising a plurality of converter cells (36), which are connected in series on a first side and are connected with each other on a second side, wherein each converter cell (36) comprises an AC-to-DC converter (40) connected to the first side and a DC-to-DC converter (42) connected to the second side;
   the method comprising the steps of:

   estimating the power transferred by the modular converter (10);
   comparing the transferred power with a threshold value;
   when the transferred power is bigger than the threshold value, operating the modular converter in a normal load operation mode (116, 122, 128);
   when the transferred power is smaller than the threshold value, operating the modular converter in a low load operation mode (114, 120, 126), in which the converter cells (36) are operated, such that switching losses are reduced with respect to the normal load operation mode.

2. The method of claim 1, further comprising the steps of:

comparing the transferred power with a first threshold value and a second threshold value;
when the transferred power is smaller than the first threshold value, operating the modular converter (10) in a first low load operation mode (114, 120, 126);
when the transferred power is smaller than the second threshold value, operating the modular converter in a second low load operation mode (114, 116, 126).

3. The method of claim 2, further comprising the step of:

when the transferred power is smaller than the first threshold value and the second threshold value, operating the modular converter (10) in the first low load operation mode and the second low load operation mode.

4. The method of one of the preceding claims,
wherein in a low load operation mode at least some of the AC-to-DC converters of the converter cells and/or at least some of the DC-to-DC converters of the converter cells are not activated.

5. The method of one of the preceding claims,
wherein a low load operation mode (114) comprises the steps of:

determining a number of DC-to-DC converters (42) to be deactivated based on the transferred power and on the maximum power that is transferable by a converter cell (36);
deactivating the number of DC-to-DC converters (42).

6. The method of claim 6, further comprising the steps of:

selecting a set of available DC-to-DC converters (42) to be deactivated based on a DC-voltage (100) at the input and/or the output (84) of the DC-to-DC converters (42);
selecting the number of DC-to-DC converters (42) to be deactivated from the set of available DC-to-DC converters.

7. The method of one of the preceding claims,
wherein in the normal load operation mode (116), all DC-to-DC converters (42) are activated.

8. The method of one of the preceding claims,
wherein a low load operation mode (120) comprises the steps of:

determining a first side AC current (80) and/or determining DC voltages (100) after the AC-to-DC converters (40);
activating AC-to-DC converters (40), when the first side AC current (80) is higher than a threshold value and/or one of the DC voltages (100) is smaller than a threshold value;
deactivating the AC-to-DC converters (40), when the sum of DC voltages (100) is higher than a threshold value.

9. The method of one of the preceding claims,
wherein in the normal load operation mode (122), the AC-to-DC converters (42) are continuously activated.

10. The method of one of the preceding claims,
wherein a low load operation mode (126) comprises the steps of:

determining a minimum number of required converter cells (36) based on the transferred power;
short-circuiting not required converter cells (36).

11. The method of one of the preceding claims,
wherein in the normal load operation mode (128) all converter cells (36) of the modular converter (10) are operated.

12. The method of claim 1, further comprising the steps of:

measuring an output voltage (84) and an output current (102) of the modular converter (10);
estimating the transferred power based on the measured output voltage and the measure output current.

13. A controller (70, 72) of a modular converter (10), wherein the controller is adapted for performing the method of one of claims 1 to 12.

14. A modular converter (10) for supplying a load (26) with a DC output voltage (84),
   wherein the modular converter (10) comprising a plurality of converter cells (36), which are connected in series on a first side and are connected in parallel on a second side, wherein each converter cell (36) comprises an AC-to-DC converter (40) connected to the first side and a DC-to-DC converter (42) connected to the second side;
   wherein the modular converter (10) comprises a controller (70, 72) according to one of the claims 12.

15. The modular converter (10) of claim 14,
   wherein each DC-to-DC converter (42) comprises a DC-to-AC subconverter (52), a transformer (54) and an AC-to-DC subconverter (56) connected in series.

EP 2 703 208 A1

Fig. 1

Fig. 2

Fig. 3

Fig. 4

Fig. 5

114

140

142

144

146

Fig. 6

K

N-K

N

K

P

Fig. 7

120

150        158

152     −

+

154        +     156

−

# Fig. 8

126

160

162

164

# Fig. 9

**Europäisches Patentamt**
**European Patent Office**
**Office européen des brevets**

## EUROPEAN SEARCH REPORT

Application Number

EP 12 18 2924

### DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | EP 0 820 893 A2 (ABB DAIMLER BENZ TRANSP [DE] DAIMLER CHRYSLER AG [DE]) 28 January 1998 (1998-01-28) * page 4, lines 2-41 * * figure 6 * | 1-15 | INV. B60L9/00 |
| X | MICHAEL STEINER ET AL: "Medium frequency topology in railway applications", 2007 EUROPEAN CONFERENCE ON POWER ELECTRONICS AND APPLICATIONS, 1 January 2007 (2007-01-01), pages 1-10, XP055048811, DOI: 10.1109/EPE.2007.4417570 * figure 1 * * paragraph [ReliabilityandAvailability] * | 1-15 | |
| X | DE 10 2010 044322 A1 (BOMBARDIER TRANSP GMBH [DE]; UNIV DRESDEN TECH [DE]) 8 March 2012 (2012-03-08) * paragraphs [0010], [0020] * * figure 1 * | 1-15 | TECHNICAL FIELDS SEARCHED (IPC) |
| A | US 2012/195081 A1 (REDDY RAGHOTHAMA [US] ET AL) 2 August 2012 (2012-08-02) * paragraph [0003]; figures 1,4 * | 1-15 | B60L H02M |
| A | S. DIECKERHOFF ET AL: "Power Loss-Oriented Evaluation of High Voltage IGBTs and Multilevel Converters in Transformerless Traction Applications", IEEE TRANSACTIONS ON POWER ELECTRONICS, vol. 20, no. 6, 1 November 2005 (2005-11-01), pages 1328-1336, XP055048808, ISSN: 0885-8993, DOI: 10.1109/TPEL.2005.857534 * figure 1 * * paragraph [000I] * | 1-15 | |

The present search report has been drawn up for all claims

| Place of search | Date of completion of the search | Examiner |
|---|---|---|
| The Hague | 9 January 2013 | Gotzig, Bernhard |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

**ANNEX TO THE EUROPEAN SEARCH REPORT
ON EUROPEAN PATENT APPLICATION NO.**

EP 12 18 2924

This annex lists the patent family members relating to the patent documents cited in the above-mentioned European search report.
The members are as contained in the European Patent Office EDP file on
The European Patent Office is in no way liable for these particulars which are merely given for the purpose of information.

09-01-2013

| Patent document cited in search report | Publication date | Patent family member(s) | | Publication date |
|---|---|---|---|---|
| EP 0820893 A2 | 28-01-1998 | AT | 236807 T | 15-04-2003 |
| | | CN | 1172746 A | 11-02-1998 |
| | | DE | 19630284 A1 | 29-01-1998 |
| | | EP | 0820893 A2 | 28-01-1998 |
| | | JP | 10234186 A | 02-09-1998 |
| DE 102010044322 A1 | 08-03-2012 | DE 102010044322 A1 | | 08-03-2012 |
| | | WO | 2012028640 A2 | 08-03-2012 |
| US 2012195081 A1 | 02-08-2012 | NONE | | |

EPO FORM P0459

For more details about this annex : see Official Journal of the European Patent Office, No. 12/82